# EUROPEAN PATENT SPECIFICATION

(11) **EP 1 398 469 B1**
(45) Date of publication and mention of the grant of the patent: **20.04.2005**
(21) Application number: 02445111.4
(22) Date of filing: 12.09.2002
(51) Int. Cl.: F01N 7/08, F01N 7/14, B60K 13/04

(54) **A bellows arrangement for connecting at least two exhaust outlet tubes of a vehicle engine with exhaust pipe means and a engine provided with such an arrangement**
Balganordnung zur Verbindung wenigstens zweier Abgasauslassrohre einer Fahrzeugbrennkraftmaschine mit Abgasrohren und eine Brennkraftmaschine ausgestattet mit einer solchen Anordnung
Arrangement de soufflets pour connecter au moins deux conduits d'échappement de sortie d'un moteur d'un véhicule avec conduits d'échappement et un moteur à combustion interne pourvue d'un arrangement

(43) Date of publication of application: 17.03.2004
(73) Proprietor: Ford Global Technologies, LLC, Dearborn, MI 48126 (US)
(72) Inventor: Simonsson, Tommy, 444 47 Stenungsund (SE)
(74) Representative: Hellbom, Lars Olof

(56) References cited:
- EP-A- 1 091 101
- EP-A- 1 152 135
- US-A- 5 365 735
- US-A- 6 156 278
- US-B1- 6 230 748
- PATENT ABSTRACTS OF JAPAN vol. 1997, no. 11, 28 November 1997 (1997-11-28) & JP 09 192727 A (FUTABA SANGYO KK), 29 July 1997 (1997-07-29)

## Description

The present invention relates to a bellows arrangement for connecting each one of at least two exhaust outlet tubes of a multicylinder internal combustion engine with exhaust pipe means, comprising a bellows tube means and a flexible tubular liner means arranged inside the bellows tube means, said liner means having one end portion adapted to be connected with said outlet tubes and an opposite end portion adapted to be connected with said exhaust pipe means

The present invention also relates to a multicylinder internal combustion engine having at least two exhaust outlet tubes and a bellows arrangement connecting said outlet tubes with exhaust pipe means.

It is common practice to connect an exhaust outlet pipe of an exhaust manifold of an internal combustion engine in a motor vehicle with the exhaust system of the vehicle via a bellows arrangement of the above described type in order to obtain a sealed but still flexible connection allowing relative movement between the engine and the exhaust system of the vehicle. In prior art arrangements the flexible tubular liner means comprises a single liner made up of a number of interconnected sheet metal tubular elements forming a flexible metal tube which, however, is not completely gas tight. Normal leakage is between 0,5-3 liters /min at a constant 0,3 bar high pressure. In order to make the connection gas tight the liner is accomodated in a bellows which usually is reinforced by means of an outer metal braid.

It is well known in the art to provide a multicylinder engine with more than one exhaust manifold. For instance it is common practice in naturally aspirated six cylinder in line engines to arrange two exhaust manifolds for each three cylinders. Previously in such engines each exhaust manifold has been connected with an individual exhaust pipe by means of a bellows arrangement of the type described above. Since such bellows arrangements must have diameters which for obvious reasons will exceed the diameters of the exhaust pipes two such bellows arrangements mounted side by side in the engine compartment will take up a lot of space, e. g. space that would rather be used for other components.

A primary object of the present invention is to achieve a bellows arrangement of the type described by way of introduction which will serve the purpose of at least two individual bellows arrangements, one for each exhaust outlet tube, but which will require much less space in the tunnel area.

Another object of the present invention is to achieve a multicylinder internal combustion engine installation with at least two exhaust outlet tubes, exhaust pipe means and a bellows arrangement which requires no or very few alterations in the packaging of the engine compartment compared with an engine installation having a conventional bellows arrangement between two exhaust outlet tubes and two exhaust pipes.

This is achieved with a bellows arrangement according to the present invention by virtue of the fact that said flexible tubular liner means comprises a first liner and at least one additional liner surrounding and spaced from the first liner, an inner channel being defined inside the first liner, an outer channel being defined between the outer surface of the first liner and the inner surface of said additional liner, one end of one channel being adapted to be connected with one outlet tube and the opposite end with said exhaust pipe means, one end of said additional channel being adapted to be connected with another outlet tube and the opposite end with said exhaust pipe means.

An engine installation according to the present invention has a bellows arrangement comprising a first flexible tubular liner, at least one additional flexible tubular liner surrounding and spaced from the first liner and a bellows surrounding said additional liner, an inner channel being defined inside the first liner, an outer channel being defined between the outer surface of the first liner and the inner surface of said additional liner, one end of one channel being connected with one exhaust outlet tube and the opposite end with said exhaust pipe means one end of the other channel being connected with the other exhaust outlet tube and the opposite end with said exhaust pipe means.

In exhaust manifolds and exhaust pipes connected thereto there is a gas flow pulsating with a high frequency. The invention is based on the discovery that the high pressure pulse will not have enough time to penetrate the wall of the inner liner before the pressure changes to low pressure. A single bellows arrangement according to the present invention for two exhaust manifolds will therefore keep the gas flow from the two exhaust manifolds separated. Even though it will have a diameter somewhat larger than prior art bellows arrangements it will be much less space consuming than two prior art bellows arrangements, i. e. one for each exhaust manifold. It will also be less expensive.

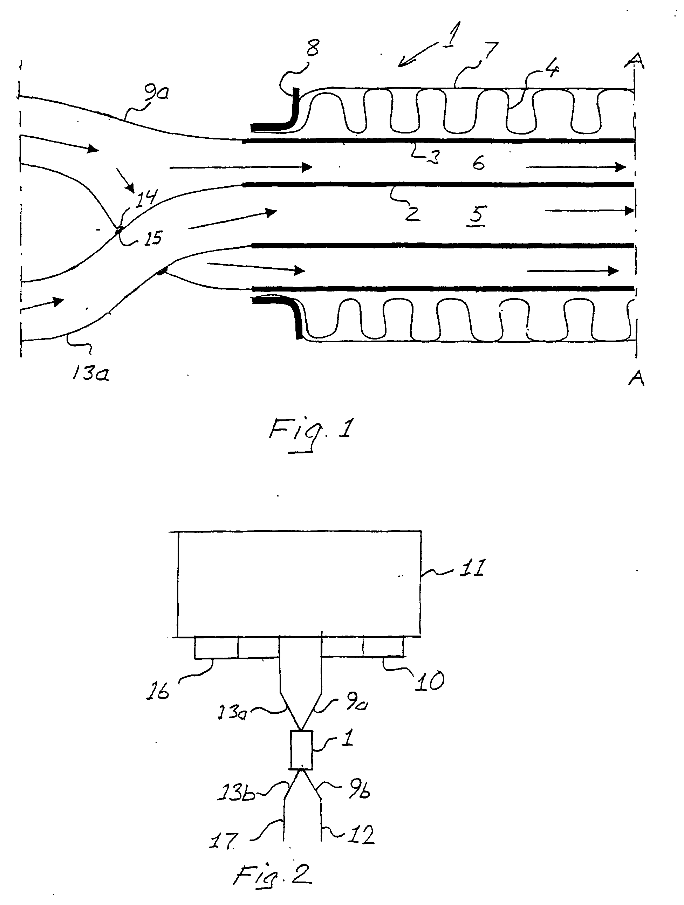

The invention will be described in more detail with reference to the accompanying drawing, wherein Fig. 1 shows a schematic longitudinal section of a portion of an embodiment of a bellows arrangement according to the invention and Fig. 2 shows a block diagram of an engine with a bellows arrangement according to the invention.

In Figures 1 and 2 a bellows arrangement generally designated 1 is shown. Fig. 1 shows the left half of the bellows arrangement 1. The not shown half to the right of the dash-dot line A-A is a mirror image of the left half. The bellows arrangement 1 comprises an inner liner 2 which can be of a kind known per se and consisting of a number of interconnected sheet metal tubular elements forming a flexible tube Concentric with the inner liner 2 an outer liner 3 is mounted which can be of the same type as the liner 2. The inner liner 2 defines an inner circular channel 5 and also together with the outer liner 3 an outer annular channel 6. The diameters of the liners are calculated so that the the pressure drop will be the same in both channels, i. e. the flow through areas should be approximately the same. More specifically, the flow through area of the outer annular channel, due to increased friction, should be somewhat larger than the flow through of the inner liner 2.

Neither liner 2, 3 is completely gas tight. The outer liner 3, according to common practice, is sealed by means of a known per se bellows 4 made of thin sheet metal. However, there is no such bellows sealing the inner liner 2. Tests have revealed that the high pressure period of the gas pulse will not last long enought for the gas to penetrate the wall of the inner liner 2. The bellows 4, also according to common practice, is reinforced by a steel braid 7.

The end portions of the bellows 4 as well as the outer liner 3 are welded to end caps 8 at opposite ends of the bellows arrangement. Also, one end portion of the outer liner 3 is welded to an exhaust outlet tube 9a connecting this end portion with an exhaust manifold 10 for three cylinders of a six cylinder in line internal combustion engine 11. The other end portion of the outer liner is via a tube 9b connected with an exhaust pipe 12 (Fig. 2). One end portion of the inner liner 2 is welded to an exhaust outlet tube 13a which runs through an opening 14 in the wall of the the tube 9a. The tube 13a is attached to the tube 9a by means of a weld 15 around the edge of the opening 14, thereby fixing the inner liner 2 inside the outer liner 3. The tube 13a connects one end portion of the inner liner 2 with an exhaust manifold 16 for the other three cylinders of the engine while another tube 13b connects the other end portion of the inner liner 2 with an exhaust pipe 17.

Even though the bellows arrangement 1 according to the present invention has been described with reference to a straight six cylinder engine with two separate manifolds, it could, for the purpose of saving space and cost, of course also be used in any vehicle having an engine with any number of cylinders and with two or more exhaust outlet tubes from a single or more manifolds in order to connect the outlet tubes with the vehicle exhaust pipe system, e. g. with two or more separate exhaust pipes. For instance, a five cylinder engine could have a bellows arrangement with three liners, one liner being connected with an exhaust outlet tube from cylinders 1 and 4, a second liner being connected with an exhaust outlet tube from cylinders 2 and 5 and a third liner being connected with cylinder 3 only.

## Claims

1. A bellows arrangement for connecting each one of at least two exhaust outlet tubes (9a, 13a) of a multicylinder internal combustion engine (11) with exhaust pipe means (12,17), comprising a bellows tube means (4) and a flexible tubular liner means (2,3) arranged inside the bellows tube means, said liner means having one end portion adapted to be connected with said outlet tubes and an opposite end portion adapted to be connected with said exhaust pipe means, **characterized in that** said flexible tubular liner means comprises a first liner (2) and at least one additional liner (3) surrounding and spaced from the first liner, an inner channel (5) being defined inside the first liner, an outer channel (6) being defined between the outer surface of the first liner and the inner surface of said additional liner, one end of one channel being adapted to be connected with one outlet tube and the opposite end with said exhaust pipe means (12,17), one end of said additional channel being adapted to be connected with another outlet tube and the opposite end with said exhaust pipe means.

2. A bellows arrangement according to claim 1, **characterized in that** one end of each channel (5, 6) is adapted to be connected with an individual exhaust outlet tube (9a, 13a) of exhaust manifold means (10, 16).

3. A bellows arrangement according to claim 2, **characterized in that** one end of one channel (6) is adapted to be connected with an exhaust outlet pipe (9a) of one exhaust manifold (10), another channel (5) being adapted to be connected with an exhaust oulet pipe(13a) of another exhaust manifold (16).

4. A bellows arrangement according to one of claims 1-3, **characterized in that** the inner channel (5) has a circular cross-section while the outer channel (6) has an annular cross-section.

5. A bellows arrangement according to one of claims 1-4, **characterized in that** the channels (5, 6) have approximately the same cross-sectional areas.

6. A bellows arrangement according to one of claims 1-5, **characterized in that** an exhaust outlet tube (13a) connected to an inner channel (5) extends through an opening (14) in the wall of another exhaust outlet tube (9a).

7. A bellows arrangement according to claim 6, **characterized in that** said exhaust outlet tube (13a) connected to an inner channel (5) is fixed by a weld (15) to the edge of the opening (14) in the wall of said other exhaust outlet tube (9).

8. A multicylinder internal combustion engine (11) having at least two exhaust outlet tubes (9a, 13a) and a bellows arrangement (1) connecting said outlet tubes with exhaust pipe means (12, 17), **characterized in that** said bellows arrangement (1) comprises a first flexible tubular liner (2), at least one additional flexible tubular liner (3) surrounding and spaced from the first liner and a bellows (4) surrounding said additional liner, an inner channel (5) being defined inside the first liner, an outer channel (6) being defined between the outer surface of the first liner and the inner surface of said additional liner, one end of one channel being connected with one exhaust outlet tube (9a) and the opposite end with said exhaust pipe means (12, 17) one end of the other channel being connected with the other exhaust outlet tube (13a) and the opposite end with said exhaust pipe means (12, 17).

9. A combustion engine according to claim 8, **characterized in that** the engine (11) is a six cylinder in line engine having first exhaust outlet tube (9a) connected with a first manifold (10) for a first set of three cylinders and a second exhaust outlet tube (13a) connected with a second manifold (16) for a second set of three cylinders.

10. A combustion engine according to claim 8 or 9, **characterized in that** said exhaust pipe means comprises at least two individual exhaust pipes (12,17), one exhaust pipe (12) communicating with one channel (6) and another exhaust pipe (17) communicating with another channel (5).

## Patentansprüche

1. Balganordnung zur Verbindung eines jeden von wenigstens zwei Abgasauslassrohren (9a, 13a) einer Mehrzylinder-Brennkraftmaschine (11) mit einer Abgasrohrvorrichtung (12, 17), mit
einer Balgrohrvorrichtung (4) und einer flexiblen rohrförmigen Einsatzvorrichtung (2, 3), die innerhalb der Balgrohrvorrichtung angeordnet ist, wobei die Einsatzvorrichtung einen Endbereich, ausgebildet zum Verbinden mit dem Auslassrohr und einem entgegengesetzten Endbereich, ausgebildet zum Verbinden mit der Abgasrohrvorrichtung aufweist,
**dadurch gekennzeichnet, dass**
die flexible rohrförmige Einsatzvorrichtung ein erstes Einsatzstück (2) und wenigstens ein zusätzliches Einsatzstück (3) aufweist, das das erste Einsatzstück umgibt und von diesem beabstandet ist,
ein innerer Kanal (5) innerhalb des ersten Einsatzstückes definiert wird, ein äußerer Kanal (6) zwischen der äußeren Oberfläche des ersten Einsatzstückes und der inneren Oberfläche des zusätzlichen Einsatzstückes definiert wird, ein Ende des einen Kanals zum Verbinden mit einem Auslassrohr und das entgegengesetzte Ende zum Verbinden mit der Abgasrohrvorrichtung (12, 17) ausgebildet ist, und ein Ende des zusätzlichen Kanals zum Verbinden mit einem anderen Auslassrohr und das entgegengesetzte Ende zum Verbinden mit der Abgasrohrvorrichtung ausgebildet ist.

2. Balganordnung gemäß Anspruch 1,
**dadurch gekennzeichnet, dass**
das eine Ende eines jeden Kanals (5, 6) zum Verbinden mit einem einzelnen Abgasauslassrohr (9a, 13a) einer Abgassammlervorrichtung (10, 16) ausgebildet ist.

3. Balganordnung gemäß Anspruch 2,
**dadurch gekennzeichnet, dass**
das eine Ende des einen Kanals (6) zum Verbinden mit einem Abgasauslassrohr (9a) des einen Abgassammlers (10), und ein anderer Kanal (5) zum Verbinden mit einem Abgasauslassrohr (13a) eines anderen Abgassammlers (16) ausgebildet ist.

4. Balganordnung gemäß einem der Ansprüche 1 bis 3,
**dadurch gekennzeichnet, dass**
der innere Kanal (5) einen kreisförmigen Querschnitt aufweist, während der äußere Kanal (6) einen ringförmigen Querschnitt aufweist.

5. Balganordnung gemäß einem der Ansprüche 1 bis 4,
**dadurch gekennzeichnet, dass**
die Kanäle (5, 6) im wesentlichen die selbe Querschnittsfläche aufweisen.

6. Balganordnung gemäß einem der Ansprüche 1 bis 5,
**dadurch gekennzeichnet, dass**
sich ein Abgasauslassrohr (13a), das mit einem inneren Kanal (5) verbunden ist, durch eine Öffnung (14) in der Wandung eines anderen Abgasauslassrohres (9a) erstreckt.

7. Balganordnung gemäß Anspruch 6,
**dadurch gekennzeichnet, dass**
das Abgasauslassrohr (13a), das mit einem inneren Kanal (5) verbunden ist, durch eine Schweißnaht (15) an der Kante der Öffnung (14) in der Wandung des anderen Abgasauslassrohres (9a) fixiert ist.

8. Mehrzylinder-Brennkraftmaschine (11), mit wenigstens zwei Abgasauslassrohren (9a, 13a) und einer Balganordnung (1), die die Auslassrohre mit einer Abgasrohrvorrichtung (12, 17) verbindet,
**dadurch gekennzeichnet, dass**
die Balganordnung folgendes aufweist:
ein erstes flexibles rohrförmiges Einsatzstück (2), wenigstens ein zusätzliches flexibles rohrförmiges Einsatzstück (3), das das erste Einsatzstück umgibt und
von diesem beabstandet ist, einen Balg (4), der das zusätzliche Einsatzstück umgibt, einen inneren Kanal (5), der innerhalb des ersten Einsatzstücks definiert ist, einen äußeren Kanal (6), der zwischen der äußeren Oberfläche des inneren Einsatzstücks und der inneren Oberfläche des zusätzlichen Einsatzstücks definiert ist, wobei ein Ende des ersten Kanals mit einem Abgasauslassrohr (9a) und das entgegengesetzte Ende mit einer Abgasrohrvorrichtung (12, 17) verbunden ist, und
ein Ende des anderen Kanals mit dem anderen Abgasauslassrohr (13a) und das entgegengesetzte Ende mit der Abgasrohrvorrichtung (12, 17) verbunden ist.

9. Brennkraftmaschine gemäß Anspruch 8,
**dadurch gekennzeichnet, dass**
die Brennkraftmaschine (11) ein Sechszylinder-Reihenmotor ist, mit einem ersten Abgasauslassrohr (9a), das mit einem ersten Abgassammler (10) für die ersten drei Zylinder verbunden ist und einem zweiten Abgasauslassrohr (13a), das mit einem zweiten Abgassammler (16) für die zweiten drei Zylinder verbunden ist.

10. Brennkraftmaschine gemäß Anspruch 8 oder 9,
**dadurch gekennzeichnet, dass**
die Abgasrohrvorrichtung wenigstens zwei eigenständige Abgasrohre (12, 17) aufweist, wobei ein Abgasrohr (12) mit einem Kanal (6) kommuniziert und ein anderes Abgasrohr (17) mit dem anderen Kanal (5) kommuniziert.

## Revendications

1. Un arrangement en soufflet servant à connecter chacun d'au moins deux tubes de sortie d'échappement (9a, 13a) d'un moteur à combustion interne multicylindrique (11) pourvu de moyens de tuyau d'échappement (12, 17), comportant un moyen de tube en soufflet (4) et un moyen de chemise tubulaire flexible (2, 3) aménagé à l'intérieur du moyen de tube en soufflet, ledit moyen de chemise présentant une portion d'extrémité adaptée pour être connectée avec lesdits tubes de sortie et une portion d'extrémité opposée adaptée pour être connectée avec lesdits moyens de tuyau d'échappement, **caractérisé en ce que** le moyen de chemise tubulaire flexible comporte une première chemise (2) et au moins une chemise additionnelle (3) entourant et étant espacée de la première chemise, un canal interne (5) étant défini à l'intérieur de la première chemise, un canal externe (6) étant défini entre la surface externe de la première chemise et la surface interne de ladite chemise additionnelle, une extrémité d'un canal étant adaptée pour être connectée avec un tube de sortie et l'extrémité opposée avec ledit moyen de tuyau d'échappement (12, 17), une extrémité dudit canal additionnel étant adaptée pour être connectée avec un autre tube de sortie et l'extrémité opposée avec ledit moyen de tuyau d'échappement.

2. Un arrangement en soufflet selon la revendication 1, **caractérisé en ce qu'**une extrémité de chaque canal (5, 6) est adaptée pour être connectée avec un tube de sortie d'échappement individuel (9a, 13a) d'un moyen de collecteur d'échappement (10, 16).

3. Un arrangement en soufflet selon la revendication 2, **caractérisé en ce qu'**une extrémité d'un canal (6) est adaptée pour être connectée avec un tuyau de sortie d'échappement (9a) d'un collecteur d'échappement (10), un autre canal (5) étant adapté pour être connecté avec un tuyau de sortie d'échappement (13a) d'un autre collecteur d'échappement (16).

4. Un arrangement en soufflet selon l'une quelconque des revendications 1 à 3, **caractérisé en ce que** le canal interne (5) présente une coupe transversale circulaire alors que le canal externe (6) présente une coupe transversale annulaire.

5. Un arrangement en soufflet selon l'une quelconque des revendications 1 à 4, **caractérisé en ce que** les canaux (5, 6) présentent approximativement les mêmes aires de coupes transversales.

6. Un arrangement en soufflet selon l'une quelconque des revendications 1 à 5, **caractérisé en ce qu'**un tube de sortie d'échappement (13a) connecté à un canal interne (5) s'étend au travers d'une ouverture (14) dans la paroi d'un autre tube de sortie d'échappement (9a).

7. Un arrangement en soufflet selon la revendication 6, **caractérisé en ce que** ledit tube de sortie d'échappement (13a) connecté au canal interne (5) est fixé par une soudure (15) au rebord de l'ouverture (14) dans la paroi dudit autre tube de sortie d'échappement (9).

8. Un moteur à combustion interne multicylindrique (11) présentant au moins deux tubes de sortie d'échappement (9a, 13a) et un arrangement en soufflet (1) connectant lesdits tubes de sortie avec des moyens de tuyau d'échappement (12, 17), **caractérisé en ce que** ledit arrangement en soufflet (1) comporte une première chemise tubulaire flexible (2), au moins une chemise tubulaire flexible additionnelle (3) entourant et étant espacée de la première chemise et un soufflet (4) entourant ladite chemise additionnelle, un canal interne (5) étant défini à l'intérieur de la première chemise, un canal externe (6) étant défini entre la surface externe de la première chemise et la surface interne de la chemise additionnelle, une extrémité d'un canal étant connectée avec un tube de sortie d'échappement (9a) et l'extrémité opposée avec ledit moyen de tuyau d'échappement (12, 17) une extrémité de l'autre canal étant connectée avec l'autre tube de sortie d'échappement (13a) et l'extrémité opposée avec ledit moyen de tuyau d'échappement (12, 17).

9. Un moteur à combustion selon la revendication 8, **caractérisé en ce que** le moteur (11) est un moteur à six cylindres en ligne présentant un premier tube de sortie d'échappement (9a) connecté avec un premier collecteur (10) pour un premier groupe de trois cylindres et un deuxième tube de sortie d'échappement (13a) connecté avec un deuxième collecteur (16) pour un deuxième groupe de trois cylindres.

10. Un moteur à combustion selon la revendication 8 ou 9, **caractérisé en ce que** ledit moyen de tuyau d'échappement comporte au moins deux tuyaux d'échappements individuels (12, 17), un tuyau d'échappement (12) communiquant avec un canal (6) et un autre tuyau d'échappement (17) communiquant avec un autre canal (5).
